# FASCICULE DE BREVET EUROPEEN

(11) **EP 0 910 940 B1**
(45) Date de publication et mention de la délivrance du brevet: **26.02.2003**
(21) Numéro de dépôt: 98440225.5
(22) Date de dépôt: 16.10.1998
(51) Int. Cl.: A01D 34/66, A01D 67/00

(54) **Machine agricole**
Landwirtschaftmaschine
Agricultural machine

(30) Priorité: 21.10.1997 FR 9713413
(43) Date de publication de la demande: 28.04.1999
(73) Titulaire: KUHN S.A., 67700 Saverne (FR)
(72) Inventeur: Neuerburg, Horst, 67700 Saverne (FR); Kieffer, Fernand, 67700 Saverne (FR)

(56) Documents cités:
- EP-A- 0 068 560
- EP-A- 0 402 957
- EP-A- 0 709 018

## Description

La présente invention concerne une machine agricole selon le préambule de la revendication 1.

Il est connu par le document FR-A-2 726 152 une machine agricole destinée à la coupe de végétaux équipée d'un dispositif limiteur. Cette machine agricole comporte dans les grandes lignes :
- une structure d'attelage destinée à être liée à un véhicule moteur ;
- un mécanisme de coupe destiné à être entraîné en mouvement par le véhicule moteur au moyen d'organes d'entraînement et pouvant s'étendre :
   - en position de travail, transversalement à la direction d'avance et reposant sur le sol ;
   - en position andain, transversalement à la direction d'avance et au-dessus de la surface du sol ;
      et
   - dans une position de transport.
- un bras de suspension lié d'une part à la structure d'attelage et d'autre part au milieu du mécanisme de coupe au moyen d'une articulation d'axe longitudinal dirigé suivant la direction d'avance au travail lorsque ledit mécanisme de coupe est dans la position de travail de manière à permettre à ce dernier de pivoter autour dudit axe longitudinal ;
   et
- un dispositif limiteur destiné d'une part, à limiter le pivotement dudit mécanisme de coupe lorsque celui-ci est en position de travail ou d'andain, et d'autre part, à condamner ledit pivotement lorsque ledit mécanisme de coupe est en position de transport. Ce dispositif limiteur connu comporte un premier ensemble lié au bras de suspension et un deuxième ensemble lié au mécanisme de coupe. Le premier ensemble comporte un verrou pouvant pivoter autour d'un axe de pivotement et est destiné à collaborer avec deux arrêts appartenant à un limiteur qui fait parti du deuxième ensemble. Le limiteur comporte à cet effet une ouverture allongée à l'intérieur de laquelle s'étend l'axe autour duquel peut pivoter le verrou, les extrémités de ladite ouverture formant chacune une butée.

En position de travail et en position andain, le verrou est escamoté de manière à permettre au limiteur, plus précisément à l'ouverture allongée, d'évoluer par rapport à l'axe autour duquel peut pivoter ledit verrou, et cela dans les limites autorisées par les extrémités de ladite ouverture, ce qui permet au mécanisme de coupe de pivoter autour de l'articulation le liant au bras de suspension.

En position de transport, le verrou est pivoté autour de son axe de pivotement de sorte à s'étendre sensiblement parallèlement à l'ouverture allongée du limiteur de manière à venir en contact d'une part avec l'une des extrémités de ladite ouverture et d'autre part avec l'autre extrémité de ladite ouverture de manière à pratiquement interdire à ladite ouverture allongée toute évolution par rapport audit axe de pivotement et donc interdire le pivotement du mécanisme de coupe autour de l'articulation le liant au bras de suspension.

Le mécanisme de coupe comporte des organes de coupe situés suivant une ligne transversale à la direction d'avance lesquels sont destinés à être entraînés en rotation par les organes d'entraînement.

A cet effet, les organes d'entraînement comportent un arbre de transmission télescopique à joints universels qui s'étend transversalement à la direction d'avance lorsque le mécanisme de coupe est en position de travail. Cet arbre de transmission est destiné à transmettre le mouvement à un boîtier de renvoi situé au-dessus de l'organe de coupe le plus près de la structure d'attelage.

Un des avantages de ce dispositif limiteur connu est qu'il autorise, notamment en position de travail, un grand et libre pivotement du mécanisme de coupe autour de l'articulation le liant au bras de suspension. Un tel pivotement du mécanisme de coupe permet à ce dernier une bonne adaptation au relief du terrain lors du travail.

Lors du travail, il est cependant fréquent de voir de la matière coupée ou de la terre qui vient se coller au mécanisme de coupe ce qui a pour effet d'alourdir et de déséquilibrer ledit mécanisme de coupe lorsque ce dernier s'étend en position andain. A cet effet, le mécanisme de coupe pivote d'un côté ou de l'autre autour de l'axe longitudinal de l'articulation le liant au bras de suspension ce qui a pour conséquence de diminuer la garde au sol de ladite machine agricole connue. Une telle machine agricole risque de s'étendre, en position andain, trop près du sol et gêner de ce fait, les manoeuvres en bout de parcelle ce qui nécessite une attention accrue de l'opérateur lors des manoeuvres en bout de parcelle et qui se traduit trop souvent par une collision entre le mécanisme de coupe et le sol. De telles collisions entre le mécanisme de coupe et le sol risque de détériorer la machine agricole.

Le but de la présente invention est d'améliorer le dispositif limiteur qui équipe cette machine agricole de coupe de végétaux connue.

A cet effet, la machine agricole selon la présente invention est caractérisée en ce que ladite butée (au moins une butée) est élastiquement déformable de manière à limiter, d'une part, le pivotement de la deuxième unité autour de l'axe lorsque ladite deuxième unité est soumise à un premier couple de pivotement, et de tolérer, d'autre part, un pivotement nettement plus important de ladite deuxième unité autour dudit axe lorsque ladite deuxième unité est soumise à un deuxième couple de pivotement.

Selon une autre caractéristique, ladite machine agricole est une machine de coupe de végétaux comportant :
- une structure d'attelage destinée à être liée à un véhicule moteur ;
- un mécanisme de coupe, formant ladite deuxième unité, s'étendant :
   - en position de travail, transversalement à la direction d'avance et reposant sur le sol ;
   - en position andain, transversalement à la direction d'avance et au-dessus de la surface du sol ;
- un bras de suspension, formant ladite première unité, lié d'une part à la structure d'attelage et d'autre part au mécanisme de coupe au moyen de ladite articulation dont l'axe est dirigé au moins sensiblement suivant la direction d'avance au travail lorsque ledit mécanisme de coupe est dans la position de travail de sorte à permettre audit mécanisme de coupe de pivoter autour dudit axe.

Une telle machine de coupe de végétaux permet, en position de travail, un certain libre pivotement et un grand débattement du mécanisme de coupe autour de l'axe longitudinal de l'articulation le liant au bras de suspension tout en ayant une grande garde au sol en position andain.

L'invention concerne également les caractéristiques suivantes considérées isolément ou dans toutes leurs combinaisons techniquement possibles :
- le deuxième couple de pivotement est supérieur au premier couple de pivotement ;
- la (les) butée(s) comporte(nt) au moins un élément élastique lié(s) à un des ensembles et destiné à venir en contact avec l'autre ensemble lorsque la deuxième unité pivote autour de l'axe d'une certaine valeur, cet (ces) élément(s) élastique(s) permet(tent) notamment un grand pivotement de la deuxième unité autour de l'axe de l'articulation liant cette dernière à la première unité ;
- la deuxième unité peut pivoter autour de l'axe en deux phases distinctes :
   - une première phase à laquelle correspond le pivotement limité de ladite deuxième unité et dans laquelle ladite deuxième unité pivote librement autour dudit axe entre les limites autorisées par la (les) butée(s) ;
   - une deuxième phase à laquelle correspond le pivotement nettement plus important de ladite deuxième unité et dans laquelle ladite deuxième unité pivote autour dudit axe entre les limites autorisées par la (les) butée(s) à l'encontre des efforts développés par le (les) élément(s) élastique(s) ;
- le (les) élément(s) élastique(s) est (sont) destiné(s) à rappeler la deuxième unité de la deuxième phase vers la première phase ce qui permet notamment d'assurer une certaine position de la deuxième unité lorsque celle-ci n'est plus soumise à un couple de pivotement ou un couple de pivotement relativement faible ;
- la position et/ou la raideur de la (des) butée(s) est (sont) réglable(s) de manière à pouvoir régler d'une part la position de la deuxième unité lorsqu'elle n'est plus soumise à un couple de pivotement ou à un couple de pivotement très faible et d'autre part l'intensité du couple de pivotement permettant de faire pivoter davantage ladite deuxième unité autour de l'axe de l'articulation ;
- la (les) butée(s) est (sont) destinée(s) à dissiper tout ou partie des efforts engendrés par le pivotement de la deuxième unité autour de l'axe de l'articulation ;
- le dispositif limiteur est combiné avec un dispositif de verrouillage destiné à condamner au moins sensiblement le pivotement de la deuxième unité autour de l'axe de l'articulation ;
- le dispositif de verrouillage comporte un verrou lié à l'un des ensembles et destiné à agir sur l'autre ensemble pour condamner le pivotement de la deuxième unité autour de l'axe de l'articulation ;
- il est prévu un dispositif de commande destiné à commander le dispositif de verrouillage ;
- le mécanisme de coupe peut être pivoté dans une position de transport, lors de la mise en position de transport le dispositif de commande commande automatiquement le dispositif de verrouillage ce qui permet de condamner automatiquement le pivotement du mécanisme de coupe lors de ladite mise en position de transport.

D'autres objets et caractéristiques ressortiront de la description ci-après avec référence aux dessins annexés qui représentent à titre d'exemples non limitatifs quelques formes de réalisation de la machine de coupe équipée du dispositif limiteur selon l'invention.

Sur ces dessins :
- la figure 1 représente une machine de coupe équipée du dispositif limiteur selon l'invention en position de travail et en vue de dessus, selon une première forme de réalisation ;
- la figure 2 représente une vue de derrière de la machine de coupe de la figure 1 ;
- la figure 3 représente à une échelle agrandie, une vue partielle de la machine de coupe suivant la flèche III représentée sur la figure 1 sur laquelle ont été effectuées quelques coupes partielles ;
- la figure 4 représente une vue de derrière de la machine de coupe de la figure 1 en position andain ;
- la figure 5 représente, à une échelle agrandie, la zone V de la figure 4 et sur laquelle ont été effectuées quelques coupes partielles ;
- la figure 6 représente une vue de dessus de la machine de coupe de la figure 1, en position de transport ;
- la figure 7 représente à une échelle agrandie, une vue partielle de la machine de coupe suivant la flèche VII représentée sur la figure 6 ;
- la figure 8 représente à une échelle agrandie, une vue partielle de la machine de coupe équipée du dispositif limiteur selon une deuxième forme de réalisation.

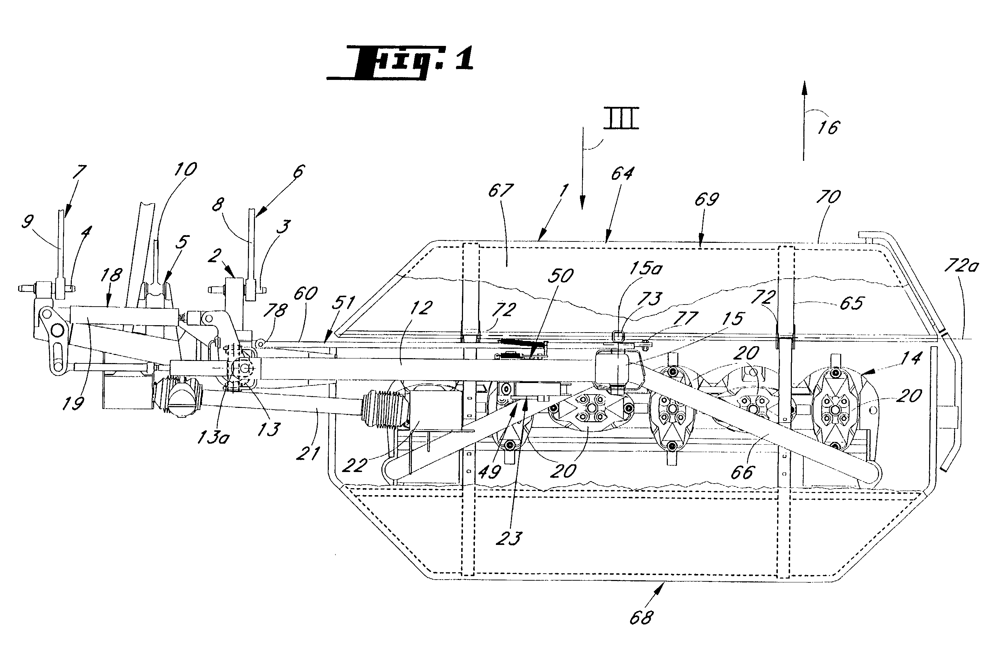

La machine de coupe (1) telle que représentée sur les figures 1 à 7 est semblable à celle décrite par le document FR-A-2 726 152. Pour de plus amples détails, on se reportera, en cas de besoin, au texte dudit document.

La machine de coupe (1) telle que représentée sur les figures 1 à 7 comporte une structure d'attelage (2) munie de deux points d'attelage inférieurs (3, 4) et d'un point d'attelage supérieur (5) au moyen desquels ladite machine de coupe (1) est liée à un dispositif d'attelage (6) d'un véhicule moteur (7). Selon l'exemple de réalisation représenté, le dispositif d'attelage (6) du véhicule moteur (7) comporte deux bras d'attelage inférieurs (8, 9) et une bielle supérieure (10) permettant de déplacer, au moins sensiblement verticalement la structure d'attelage (2) de la machine de coupe (1).

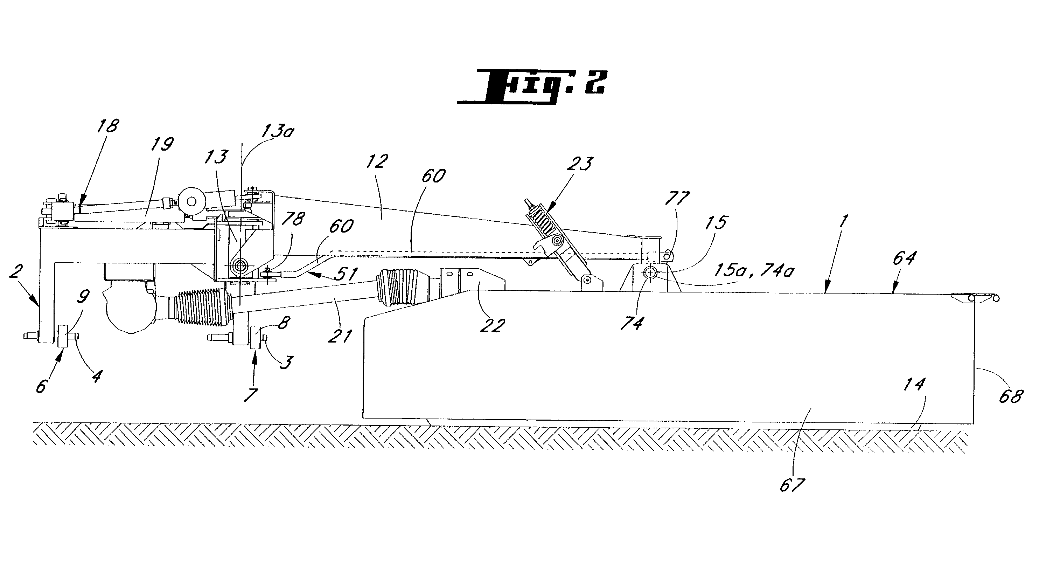

A la structure d'attelage (2) est lié un bras de suspension (12) au moyen d'une première articulation (13) d'axe longitudinal (13a) au moins sensiblement vertical. A l'extrémité du bras de suspension (12) est lié un mécanisme de coupe (14) au moyen d'une deuxième articulation (15) d'axe longitudinal (15a) au moins sensiblement horizontal et dirigé au moins sensiblement suivant la direction d'avance au travail (16) lorsque ledit mécanisme de coupe (14) est en position de travail tel que représenté sur les figures 1 et 2.

Le mécanisme de coupe (14) et le bras de suspension (12) s'étendent en position de travail et en position andain, transversalement à la direction d'avance (16) alors que, en position de transport, ledit mécanisme de coupe (14) et ledit bras de suspension (12) s'étendent au moins sensiblement suivant la direction d'avance (16). En position de travail le mécanisme de coupe (14) repose sur le sol (S) alors qu'en position andain ledit mécanisme de coupe (14) s'étend au-dessus de la surface du sol (S).

A cet effet, est prévu un moyen de manoeuvre (18) comportant un vérin hydraulique (19) destiné à pivoter le bras de suspension (12) et le mécanisme de coupe (14) de la position de transport dans la position andain, ou inversement autour de l'axe longitudinal (13a) de la première articulation (13).

A la lumière de la figure 1 on voit encore que le mécanisme de coupe (14) comporte des organes de coupe (20) destinés à couper ou hacher des végétaux ou des plantes sur pied. A cet effet, sont prévus des organes d'entraînement comprenant notamment un arbre de transmission télescopique (21) à joints universels destiné à transmettre le mouvement à un boîtier de renvoi (22) situé au-dessus de l'organe de coupe (20) s'étendant le plus près de la structure d'attelage (2).

A la lumière des figures 1 à 7, on voit encore que la machine de coupe (1) est dotée d'un dispositif limiteur (23) permettant, en position de travail, et en position andain, un certain libre pivotement et un grand débattement du mécanisme de coupe (14) autour de l'axe longitudinal (15a) de la deuxième articulation (15) (dans les limites autorisées par ledit dispositif limiteur (23)) tout en ayant une grande garde au sol, et en position de transport, de condamner au moins sensiblement ledit pivotement.

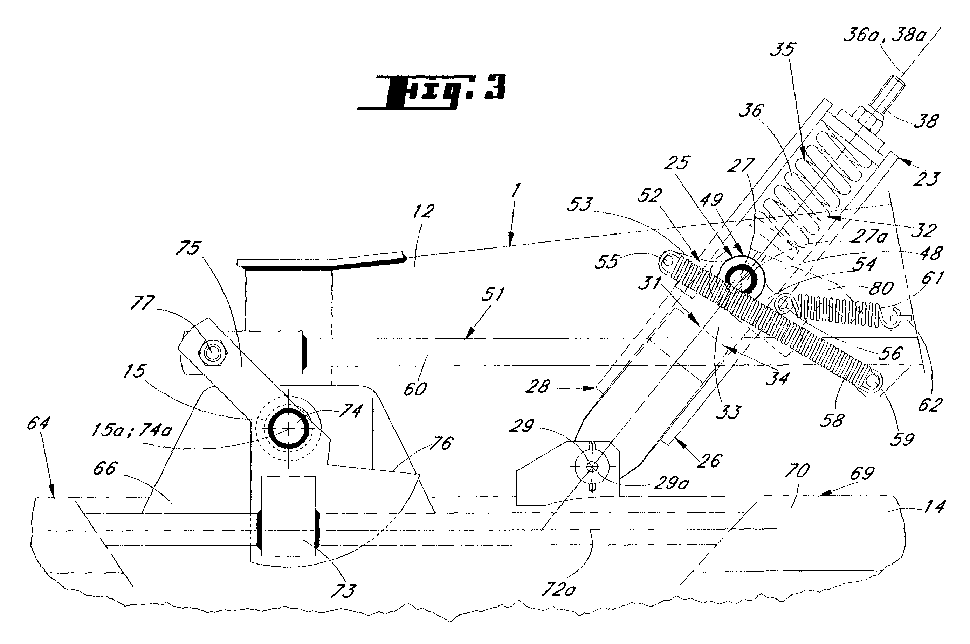

A cet effet, on voit plus précisément sur la figure 3, que le dispositif limiteur (23) comporte un premier ensemble (25) et un deuxième ensemble (26), ledit premier ensemble (25) est lié à une première unité qui est, selon l'exemple de réalisation représenté, le bras de suspension (12) tandis que le deuxième ensemble (26) est lié à une deuxième unité qui est, selon l'exemple de réalisation représenté, le mécanisme de coupe (14).

Le premier ensemble (25) comporte un tourillon (27) d'axe longitudinal (27a) sensiblement parallèle à l'axe longitudinal (15a) de la deuxième articulation (15) alors que le deuxième ensemble (26) comporte un limiteur (28) qui est lié au mécanisme de coupe (14) au moyen d'une troisième articulation (29) d'axe longitudinal (29a) au moins sensiblement parallèle à l'axe longitudinal (15a).

Le dispositif limiteur (23) comporte deux butées (31 ; 32) sur lesquelles est destiné à venir en contact le tourillon (27) de manière à limiter le pivotement du mécanisme de coupe (14) autour de l'axe longitudinal (15a) de la deuxième articulation (15). A cet effet, le limiteur (28) comporte une ouverture allongée (33) qui est traversée par le tourillon (27), une (31) des butées (31, 32) étant formée par l'extrémité (34) de ladite ouverture allongée (33) la plus proche de la troisième articulation (29) alors que l'autre butée (32) est située aux alentours de l'extrémité (35) la plus éloignée de ladite troisième articulation (29).

On remarquera que le mécanisme de coupe (14) peut pivoter autour de l'axe longitudinal (15a) de la deuxième articulation (15) en deux phases distinctes :
- une première phase à laquelle correspond le pivotement limité dudit mécanisme de coupe (14) et dans laquelle ledit mécanisme de coupe (14) pivote librement autour dudit axe longitudinal (15a) entre les limites autorisées par les butées (31, 32) ;
   et
- une deuxième phase à laquelle correspond le pivotement nettement plus important dudit mécanisme de coupe (14) et dans laquelle ledit mécanisme de coupe (14) pivote autour dudit axe longitudinal (15a) entre lesdites limites autorisées et à l'encontre des efforts développés par au moins une des butées (31, 32).

A cet effet, l'autre butée (32) est élastiquement déformable de manière à limiter, d'une part, le pivotement du mécanisme de coupe (14) autour de l'axe longitudinal (15a) de la deuxième articulation (15) lorsque ledit mécanisme de coupe (14) est soumis à un premier couple de pivotement, et de tolérer d'autre part, un pivotement nettement plus important dudit mécanisme de coupe (14) autour dudit axe longitudinal (15a) lorsque ledit mécanisme de coupe (14) est soumis à un deuxième couple de pivotement qui est supérieur au premier couple de pivotement.

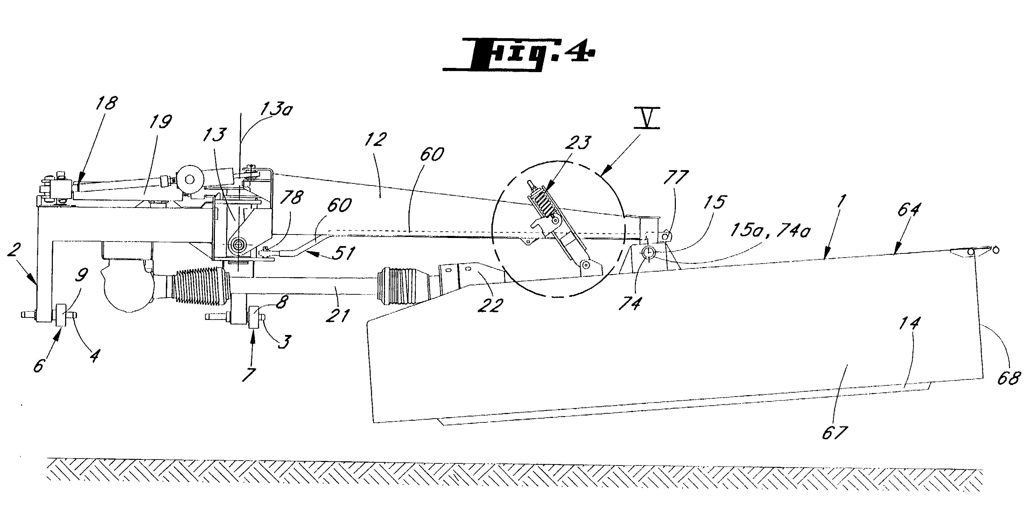

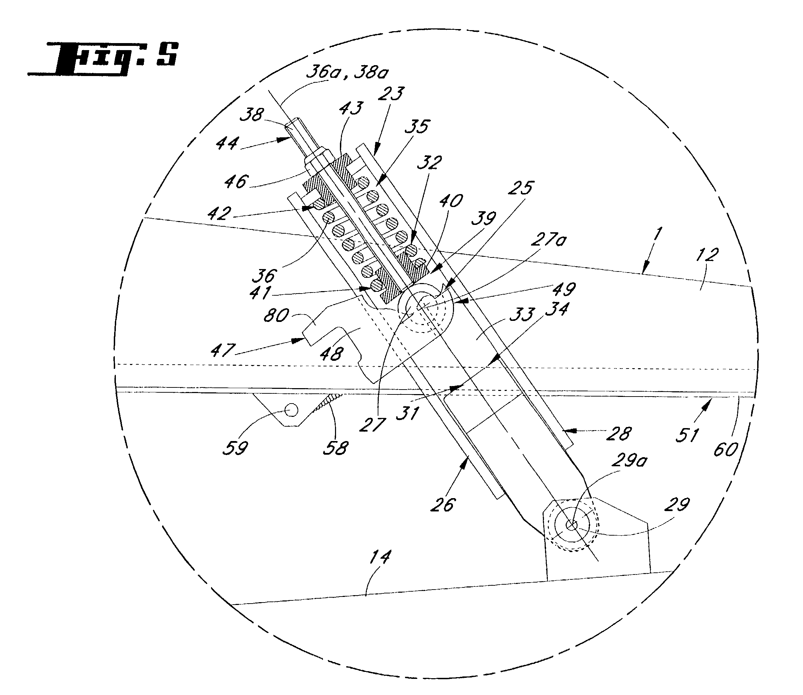

Pour ce faire, l'autre butée (32) comporte un élément élastique qui est, selon l'exemple de réalisation représenté, un ressort de compression (36) lié d'une part au limiteur (28) à l'extrémité (35) la plus éloignée de la troisième articulation (29) de l'ouverture allongée (33) et destiné d'autre part à venir en contact avec le tourillon (27) lorsque le mécanisme de coupe (14) pivote autour de l'axe longitudinal (15a) d'une certaine valeur dans le sens correspondant tel que représenté sur les figures 4 et 5. On notera bien entendu que le ressort de compression (36) peut également venir en contact avec le tourillon (27) lorsque le mécanisme de coupe (14) s'étend en position de travail ou de transport.

A la lumière des figures 3, 5 et 7 on voit plus clairement que les caractéristiques du ressort de compression (36) peuvent être modifiées. En effet, la figure 5 montre qu'à l'intérieur du ressort de compression (36) s'étend, selon l'exemple de réalisation représenté, une tige filetée (38) d'axe longitudinal (38a) sensiblement confondu avec l'axe longitudinal (36a) dudit ressort de compression (36). A l'extrémité (39) de la tige filetée (38) située le plus près de la troisième articulation (29), est vissé un premier élément d'arrêt (40) sur lequel prend appui l'une (41) des extrémités (41, 42) du ressort de compression (36).

Aux alentours de l'extrémité (35) de l'ouverture allongée (33) est prévu un deuxième élément d'arrêt (43) prenant d'une part appui sur le limiteur (28) et permettant, d'autre part, de centrer le ressort de compression (36) à son autre extrémité (42) par rapport à la tige filetée (38).

On notera qu'à son autre extrémité (42), le ressort de compression (36) prend appui sur le limiteur (28). La tige filetée (38) s'étend à son autre extrémité (44) au travers du deuxième élément d'arrêt (43) et peut coulisser dans ce dernier. Aux alentours de cette autre extrémité (44) est vissé un écrou (46) prenant appui sur le deuxième élément d'arrêt (43).

En vissant l'écrou (46) on tire sur la tige filetée (38) ce qui a pour effet de rapprocher le premier et le deuxième éléments d'arrêt (40, 43) et permet donc de comprimer le ressort de compression (36). En comprimant le ressort de compression (36), on agrandit la course du tourillon (27) à l'intérieur du limiteur (28) et on augmente la raideur dudit ressort de compression (36), ce qui permet d'une part, d'agrandir l'angle du libre pivotement du mécanisme de coupe (14) autour de l'axe longitudinal (15a) de la deuxième articulation (15) et, d'autre part, d'augmenter l'intensité du deuxième couple de pivotement décrit précédemment.

Inversement, en dévissant l'écrou (46), on relâche la tige filetée (38) ce qui a pour effet d'éloigner les éléments d'arrêt (40, 43) l'un de l'autre et donc de relâcher le ressort de compression (36). En relâchant le ressort de compression (36) on diminue la course du tourillon (27) à l'intérieur du limiteur (28) et on diminue la raideur dudit ressort de compression (36) ce qui permet d'une part de diminuer l'angle du libre pivotement du mécanisme de coupe (14) autour de l'axe longitudinal (15a) de la deuxième articulation (15) et, d'autre part, de diminuer l'intensité du deuxième couple de pivotement décrit précédemment.

A la lumière des différentes figures on voit en outre que le dispositif limiteur (23) est combiné avec un dispositif de verrouillage (47) destiné à condamner au moins sensiblement le pivotement du mécanisme de coupe (14) autour de l'axe longitudinal (15a) de la deuxième articulation (15). A cet effet le dispositif de verrouillage (47) est doté d'un verrou (48) fixé à l'une (49) des extrémités (49, 50) du tourillon (27).

Ce verrou (48) est destiné à agir sur le limiteur (28) en position de transport pour condamner automatiquement le pivotement du mécanisme de coupe (14) autour de l'axe longitudinal (15a).

A cet effet, est prévu un dispositif de commande (51) destiné à commander automatiquement le dispositif de verrouillage (47) lors de la mise en position de transport.

Pour ce faire, le tourillon (27) s'étend, selon l'exemple de réalisation représenté, de part en part au travers du bras de suspension (12) et est lié à ce dernier de manière pivotante.

A l'autre extrémité (50) du tourillon (27) est prévu un levier double (52) comportant un premier et un deuxième bras (53, 54) dotés chacun d'un plot (55 ; 56) respectif.

Au plot (55) du premier bras (53) est lié un premier ressort de traction (58) lequel est lié à son autre extrémité à un plot (59) appartenant à une tringle rigide (60). Le plot (56) du deuxième bras (54) est quant à lui lié à un deuxième ressort de traction (61) lequel est lié à son autre extrémité à un plot (62) appartenant au bras de suspension (12).

A la lumière de la figure 1 on voit en sus que le mécanisme de coupe (14) comporte également un dispositif de protection (64) qui entoure les organes de coupe (20). Ce dispositif de protection (64) est destiné à éviter des accidents corporels en interdisant l'accès inopiné aux organes de coupe (20) et, selon la nature des organes de coupe (20), en empêchant la projection d'objets tels que des pierres par exemple.

Ce dispositif de protection (64) est constitué d'une ossature (65) liée à un organe porteur (66) du mécanisme de coupe (14) et d'une toile (67) tendue sur ladite ossature (65) et fixée à celle-ci. Il comporte une partie arrière (68) fixe et une partie avant (69) mobile. La partie avant mobile (69) est réalisée sous forme de volet (70) qui est lié indirectement à l'organe porteur (66) à l'aide d'une articulation (72) dont l'axe de pivotement (72a) s'étend au moins sensiblement horizontalement et au moins sensiblement orthogonalement à la direction d'avance (16) lorsque le mécanisme de coupe (14) est en position de travail. La partie avant (69) du dispositif de protection (64) peut ainsi être pivotée vers le haut autour de l'axe de pivotement (72a) pour accéder aisément notamment aux organes de coupe (20) du mécanisme de coupe (14) en vue du contrôle de leur état et, le cas échéant, de leur remplacement. Dans le voisinage de la deuxième articulation (15) liant le mécanisme de coupe (14) au bras de suspension (12), le volet (70) présente en sus un organe d'appui (73).

La deuxième articulation (15) comporte un tourillon (74) dont l'axe longitudinal (74a) est confondu avec l'axe longitudinal (15a) de la deuxième articulation (15).

Du côté du volet (70) du dispositif de protection (64), le tourillon (74) est muni d'une butée (75).

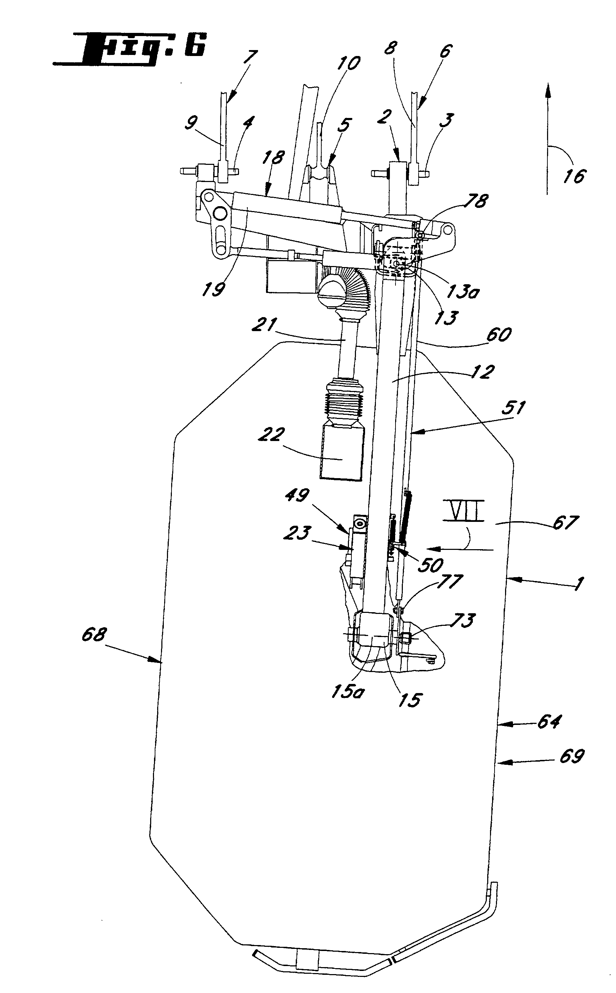

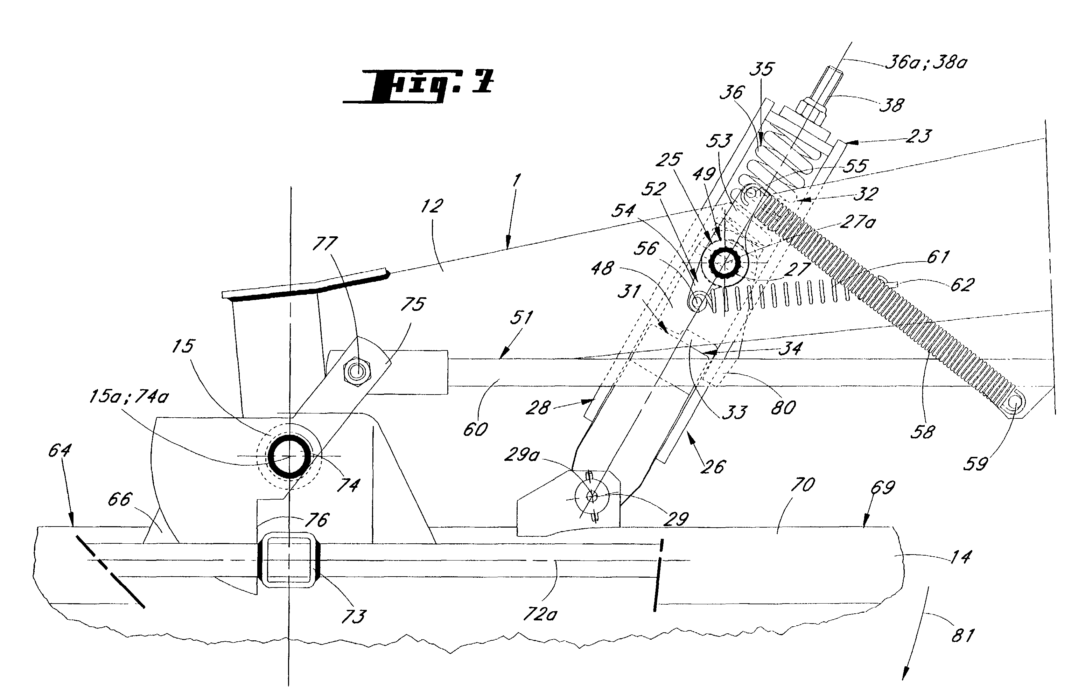

Celle-ci s'étend dans le voisinage de l'organe d'appui (73) dudit volet (70) et il apparaît très précisément sur les figures 3 et 7 que la forme et la position de ladite butée (75) sont telles que le volet (70) ne peut pas être pivoté vers le haut autour de l'axe de pivotement (72a) lorsque le mécanisme de coupe (14) se trouve en position de travail. Le pivotement du volet (70) vers le haut n'est possible que lorsque le mécanisme de coupe (14) se trouve en position de transport (figures 6 et 7). A cet effet, la butée (75) a été pivotée de manière appropriée autour de l'axe (74a) et une découpe (76) y a été prévue de sorte que dans cette position, la butée (75) ne puisse plus empêcher la rotation de l'organe d'appui (73) lorsque le volet (70) est pivoté vers le haut.

Le pivotement de la butée (75) dans la position de verrouillage du volet (70) (figures 1 à 5), respectivement dans la position de déverrouillage du volet (70) (figures 6 et 7) autour de l'axe (74a) s'opère automatiquement lorsque le mécanisme de coupe (14) est mis dans sa position de travail, respectivement dans sa position de transport par pivotement autour de l'axe longitudinal (13a). A cet effet, la tringle rigide (60) est implantée entre la butée (75) et la structure d'attelage (2) auxquelles ladite tringle (60) est liée au moyen d'une articulation (77, 78) respective. L'emplacement de l'articulation (78) liant la tringle rigide (60) à la structure d'attelage (2) est tel que :
- lorsque le mécanisme de coupe (14) est mis en position de travail, la butée (75) est pivotée en position de verrouillage du volet (70),
- lorsque le mécanisme de coupe (14) est mis en position de transport, la butée (75) est pivotée en position de déverrouillage du volet (70).

Cette machine de coupe (1) fonctionne de la manière suivante : lorsque la machine de coupe (1) est dans la position de travail telle que représentée sur les figures 1 à 3, le mécanisme de coupe (14) s'étend au moins sensiblement. orthogonalement à la direction d'avance (16) et repose sur le sol (S). Dans cette position de travail la tringle rigide (60) est disposée de telle sorte que le premier ressort de traction (58) est raccourci. De ce fait, le levier double (52) est dirigé sensiblement suivant le bras de suspension (12) et le deuxième ressort de traction (61) est également raccourci tel que représenté sur la figure 3. On remarquera que dans cette position du levier double (52), le verrou (48) s'étend sensiblement orthogonalement à l'ouverture allongée (33) du limiteur (28) ce qui permet audit limiteur (28) d'évoluer par rapport au tourillon (27) entre les limites autorisées par les butées (31, 32) et qui autorise donc au mécanisme de coupe (14) de pivoter autour de l'axe longitudinal (15a) de la deuxième articulation (15).

Comme décrit précédemment, le mécanisme de coupe (14) peut, dans une première phase, pivoter librement autour de l'axe longitudinal (15a) entre les limites autorisées par les butées (31, 32) et dans une deuxième phase, pivoter dans un sens au-delà de la limite autorisée par la butée (32) à l'encontre des efforts développés par le ressort de compression (36). Une telle réalisation permet, lors du travail avec la machine de coupe (1), au mécanisme de coupe (14) de s'adapter aisément au relief du terrain (première phase) tout en autorisant dans certaines conditions extrêmes, un pivotement accru dudit mécanisme de coupe (14) de manière à pouvoir couper de la matière le long d'une butte de terre par exemple.

Dans cette position de travail de la tringle rigide (60), la découpe (76) de la butée (75) s'étend en face de l'organe d'appui (73) ce qui interdit le pivotement du volet (70) vers le haut pour ne pas permettre l'accès aux organes de coupe (20).

Pour amener la machine de coupe (1) de la position de travail dans la position andain, l'opérateur actionne le dispositif d'attelage (6) du véhicule moteur (7) de manière à soulever sensiblement verticalement la machine de coupe (1).

Lors de la mise en position andain, le mécanisme de coupe (14) pivote quelque peu autour de l'axe longitudinal (15a) jusqu'à ce que le premier élément d'arrêt (40) vienne en appui sur le tourillon (27) (figures 4 et 5). Dans la position andain, le couple de pivotement du mécanisme de coupe (14) ne suffit pas pour comprimer le ressort de compression (36) ce qui permet avantageusement de réduire le degré de pivotement dudit mécanisme de coupe (14) et donc le maintenir sensiblement parallèlement au sol (S). Cela permet d'avoir avantageusement une grande garde au sol en position andain, de manière à pouvoir effectuer les manoeuvres en bout de parcelle sans que le mécanisme de coupe (14) rentre en interférence avec le sol (S).

On notera encore que, lors de la mise en position andain, le ressort de compression (36) permet en sus de ramener le mécanisme de coupe (14) dans une position sensiblement horizontale, lorsque ce dernier a préalablement pivoté autour de l'axe longitudinal (15a) jusqu'à comprimer ledit ressort de compression (36).

Lorsque l'opérateur souhaite amener la machine de coupe (1) de la position andain dans la position de transport, il actionne le vérin hydraulique (19) au moyen du véhicule moteur (7) de manière qu'il s'allonge, ce qui permet de pivoter le bras de suspension (12) et le mécanisme de coupe (14) autour de l'axe longitudinal (13a) de la première articulation (13) jusqu'à ce que ledit mécanisme de coupe (14) s'étende suivant la direction d'avance (16) sensiblement derrière la structure d'attelage (2).

Lors du pivotement du mécanisme de coupe (14) et du bras de suspension (12) autour de l'axe longitudinal (13a), le pivotement dudit mécanisme de coupe (14) autour de l'axe longitudinal (15a) de la deuxième articulation (15) est automatiquement condamné.

En effet, en étant placé devant le mécanisme de coupe (14) et en observant celui-ci pendant son pivotement depuis la position andain jusque dans la position de transport, on voit que la tringle rigide (60) tire sur le premier ressort de traction (58) lequel agit sur le levier double (52) qui pivote dans le sens horaire (figures 3 et 7) autour de l'axe longitudinal (27a) du tourillon (27). Ce faisant, le verrou (48) pivote également dans le sens horaire jusqu'en regard de la butée (31) du dispositif limiteur (23), ledit pivotement étant stoppé par un nez (80) du verrou (48) venant latéralement en appui contre la butée (31).

Dans cette position de verrouillage on notera que le verrou (48) est fermement maintenu en place par le premier ressort de traction (58). L'ensemble verrou (48) - tourillon (27) ne peut pas évoluer par rapport au limiteur (28) (ou alors très peu dans les limites des jeux prévus pour le bon fonctionnement du mécanisme) ce qui se traduit par une condamnation du pivotement du mécanisme de coupe (14) autour de l'axe longitudinal (15a) lorsque ledit mécanisme de coupe (14) est soumis à un couple de pivotement relativement faible comme cela est la plupart du temps le cas, lors du transport de la machine de coupe (1). Au cas où le mécanisme de coupe (14) est soumis à un couple de pivotement plus important, comme cela peut se produire lorsque la machine de coupe (1) est transportée par le véhicule moteur (7) sur un terrain accidenté, la butée (32), plus précisément le ressort de compression (36), dissipe tout ou partie des efforts engendrés par le pivotement du mécanisme de coupe (14) autour de l'axe longitudinal (15a) dans le sens de la flèche (81) représentée sur la figure 7.

Lors de la mise en position de transport, la tringle rigide (60) fait en plus pivoter la butée (75) autour de l'axe (74a) du tourillon (74) de sorte que la découpe (76) permette le pivotement du volet (70) vers le haut.

On remarquera encore que lorsque le levier double (52) pivote dans le sens horaire autour de l'axe longitudinal (27a) du tourillon (27), ledit levier double (52) agit sur le deuxième ressort de traction (61).

Lorsque l'opérateur souhaite à nouveau ramener la machine de coupe (1) de la position de transport dans la position andain, il actionne le vérin hydraulique (19) dans le sens inverse de manière qu'il se raccourcisse ce qui permet de pivoter le bras de suspension (12) et le mécanisme de coupe (14) autour de l'axe longitudinal (13a) jusqu'à ce que ledit mécanisme de coupe (14) s'étende sensiblement orthogonalement à la direction d'avance (16). A cet effet, la tringle rigide (60) relâche au moins partiellement son action sur le premier ressort de traction (58) ce qui a pour effet de faire pivoter le levier double (52) dans le sens anti-horaire autour de l'axe longitudinal (27a) sous l'effet de l'action du deuxième ressort de traction (61). Ce faisant, le verrou (48) pivote également dans le sens anti-horaire jusqu'à s'étendre sensiblement orthogonalement à l'ouverture allongée (33) de manière à permettre à l'ensemble verrou (48) - tourillon (27) d'évoluer par rapport au limiteur (28) ce qui permet à nouveau au mécanisme de coupe (14) de pivoter autour de l'axe longitudinal (15a) de la deuxième articulation (15) comme décrit précédemment. On notera également que lors de cette mise en position andain, la tringle rigide (60) fait pivoter la butée (75) autour de l'axe (74a) de sorte que cette dernière empêche la rotation de l'organe d'appui (73) lorsque le volet (70) est pivoté vers le haut.

Ensuite pour amener la machine de coupe (1) de la position andain dans la position de travail, il suffit à l'opérateur d'abaisser ladite machine de coupe (1) au moyen du dispositif d'attelage (6) du véhicule moteur (7).

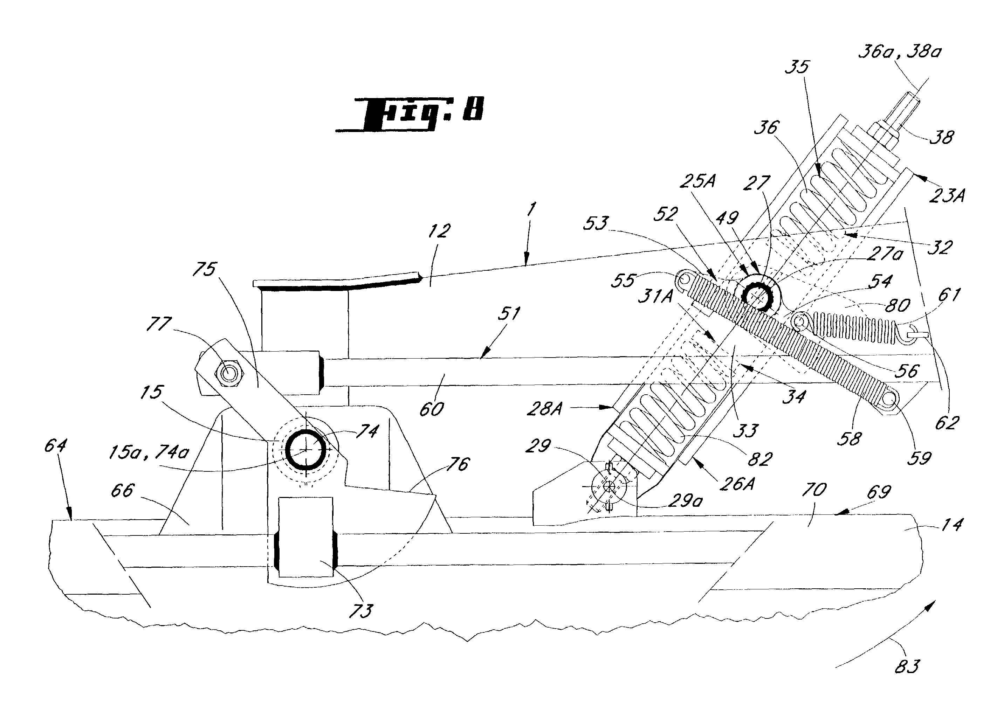

La figure 8 représente un deuxième exemple de réalisation du dispositif limiteur selon la présente idée inventive.

Ce dispositif limiteur (23A) comporte un certain nombre d'éléments qui ont été décrits précédemment. Ces éléments garderont par conséquent le même numéro de repère et ne seront pas redécrits. Il comporte également un certain nombre d'éléments qui sont comparables à des éléments du dispositif limiteur (23). Ces éléments seront affectés du même numéro de repère que ces éléments comparables du dispositif limiteur (23) suivi de la lettre A. Ils ne seront décrits que si cela s'avère nécessaire.

Le dispositif limiteur (23A) est, dans l'ensemble, semblable au dispositif limiteur (23). La différence réside dans le fait que la butée (31A) du dispositif limiteur (23A) comporte également un élément élastique qui est, selon l'exemple de réalisation représenté, un deuxième ressort de compression (82) tout à fait comparable au ressort de compression (36) de l'autre butée (32). Ce deuxième ressort de compression (82) est lié d'une part au limiteur (28A) à l'extrémité (34) la plus proche de la troisième articulation (29) de l'ouverture allongée (33) et est destiné d'autre part à venir en contact avec le tourillon (27) lorsque le mécanisme de coupe (14) pivote autour de l'axe longitudinal (15a) d'une certaine valeur dans le sens défini par la flèche (83) représentée sur la figure 8. Les caractéristiques de ce deuxième ressort de compression (82) peuvent également être modifiées au moyen d'un dispositif identique à celui permettant de modifier les caractéristiques du ressort de compression (36) tel que décrit précédemment.

Une telle réalisation permet d'une part au mécanisme de coupe (14) de pivoter, dans une première phase, librement autour de l'axe longitudinal (15a) entre les limites autorisées par les butées (31A, 32) et, dans une deuxième phase, au-delà des limites autorisées par lesdites butées (31A, 32) à l'encontre des efforts développés par les ressorts de compression (36, 82). Le mécanisme de coupe (14) peut ainsi pivoter davantage autour de l'axe longitudinal (15a) tout en étant maintenu sensiblement horizontalement en position andain. En sus, lors du transport, les efforts engendrés par le pivotement du mécanisme de coupe (14) autour de l'axe longitudinal (15a) sont dissipés tout ou partie par les ressorts de compression (36, 82) quel que soit le sens de pivotement dudit mécanisme de coupe (14).

Finalement diverses modifications peuvent être apportées aux exemples qui viennent d'être décrits, notamment en ce qui concerne la constitution des divers éléments ou par substitution d'équivalents techniques, sans pour autant sortir du domaine de protection.

On comprendra tout d'abord que l'objet de la présente invention peut s'appliquer à une machine de coupe différente de celle décrite par le document FR-A-2 726 152.

On comprendra également que le (les) élément(s) élastique(s) de la (des) butée(s) (31, 32 ; 31A) peut (peuvent) parfaitement être composée(s) d'un (de plusieurs) autre(s) élément(s) élastique(s) que le (les) ressort(s) de compression.

Il est également parfaitement possible de remplacer les ressorts de compression (36, 82) par un ressort de compression unique combiné avec un dispositif qui permet d'agir sur ledit ressort de compression unique quel que soit le sens de pivotement du mécanisme de coupe (14) autour de l'axe longitudinal (15a).

Il est encore parfaitement possible de remplacer le verrou (48) par un autre verrou comportant un bec d'ancrage permettant de fixer, en position de transport, l'ensemble verrou (l'autre) - tourillon (27) au limiteur (28) ce qui se traduit par une condamnation du pivotement du mécanisme de coupe (14) autour de l'axe longitudinal (15a) quelle que soit l'intensité du couple de pivotement.

Le mécanisme de coupe pourra être d'un type quelconque destiné à la récolte des fourrages, à l'entretien d'espaces verts, au broyage de végétaux, etc...

Il est même possible de lui adjoindre des organes destinés à traiter le produit coupé, tels que des organes de conditionnement par exemple.

## Revendications

1. Machine agricole comportant :
- une première unité (12) et une deuxième unité (14), ladite deuxième unité (14) étant liée à ladite première unité (12) au moyen d'une articulation (15) d'axe (15a), et
- un dispositif limiteur (23 ; 23A) comportant un premier ensemble (25 ; 25A) destiné à être lié à ladite première unité (12) et un deuxième ensemble (26 ; 26A) destiné à être lié à ladite deuxième unité (14), ledit dispositif limiteur (23 ; 23A) permettant à ladite deuxième unité (14) de pivoter autour dudit axe (15a) dans les limites autorisées par au moins une butée (31, 32 ; 31A, 32) faisant partie dudit dispositif limiteur (23 ; 23A),
***caractérisée en ce que*** la ou lesdites butées (31, 32 ; 31A, 32) est (sont) élastiquement déformable de manière à limiter, d'une part, le pivotement de la deuxième unité (14) autour de l'axe (15a) lorsque ladite deuxième unité (14) est soumise à un premier couple de pivotement, et de tolérer, d'autre part, un pivotement nettement plus important de ladite deuxième unité (14) autour dudit axe (15a) lorsque ladite deuxième unité (14) est soumise à un deuxième couple de pivotement.

2. Machine agricole selon la revendication 1, ***caractérisée en ce que*** le deuxième couple de pivotement est supérieur au premier couple de pivotement.

3. Machine agricole selon la revendication 1 ou 2, ***caractérisée en ce que*** la (les) butée(s) (32 ; 31A, 32) comporte(nt) au moins un élément élastique lié(s) à un des ensembles (25, 26 ; 25A, 26A) et destiné à venir en contact avec l'autre ensemble (25, 26 ; 25A, 26A) lorsque la deuxième unité (14) pivote autour de l'axe (15a) d'une certaine valeur.

4. Machine agricole selon la revendication 3, ***caractérisée en ce que*** la deuxième unité (14) peut pivoter autour de l'axe (15a) en deux phases distinctes :
- une première phase à laquelle correspond le pivotement limité de ladite deuxième unité (14) et dans laquelle ladite deuxième unité (14) pivote librement autour dudit axe (15a) entre les limites autorisées par la (les) butée(s) (31, 32 ; 31A, 32) ;
- une deuxième phase à laquelle correspond le pivotement nettement plus important de ladite deuxième unité (14) et dans laquelle ladite deuxième unité (14) pivote autour dudit axe (15a) entre les limites autorisées par la (les) butée(s) (31, 32 ; 31A, 32) à l'encontre des efforts développés par le (les) élément(s) élastique(s).

5. Machine agricole selon la revendication 3 ou 4, ***caractérisée en ce que*** le (les) élément(s) élastique(s) est (sont) destiné(s) à rappeler la deuxième unité (14) de la deuxième phase vers la première phase.

6. Machine agricole, selon l'une quelconque des revendications 1 à 5, ***caractérisée en ce que*** la position et / ou la raideur de la (des) butée(s) (31, 32 ; 31A, 32) est (sont) réglable(s).

7. Machine agricole selon l'une quelconque des revendications 1 à 6, ***caractérisée en ce que*** la (les) butée(s) (31, 32 ; 31A, 32) sont destinée(s) à dissiper tout ou partie des efforts engendrés par le pivotement de la deuxième unité (14) autour de l'axe (15a) de l'articulation (15).

8. Machine agricole selon l'une quelconque des revendications 1 à 7, ***caractérisée en ce que*** ledit dispositif limiteur (23 ; 23A) est combiné avec un dispositif de verrouillage (47) destiné à condamner au moins sensiblement le pivotement de la deuxième unité (14) autour de l'axe (15a) de l'articulation (15).

9. Machine agricole selon la revendication 8, ***caractérisée en ce que*** le dispositif de verrouillage (47) comporte un verrou (48) lié à l'un des ensembles (25, 26 ; 25A, 26A) et destiné à agir sur l'autre ensemble (25, 26 ; 25A, 26A) pour condamner le pivotement de la deuxième unité (14) autour de l'axe (15a) de l'articulation (15).

10. Machine agricole selon la revendication 8 ou 9, ***caractérisée en ce* qu'**il est prévu un dispositif de commande (51) destiné à commander le dispositif de verrouillage (47).

11. Machine agricole selon l'une quelconque des revendications 1 à 10, ***caractérisée en ce que*** ladite machine agricole est une machine de coupe de végétaux comportant :
- une structure d'attelage (2) destinée à être liée à un véhicule moteur (7) ;
- un mécanisme de coupe (14), formant ladite deuxième unité, s'étendant :
• en position de travail, transversalement à la direction d'avance (16) et reposant sur le sol (S) ;
• en position andain, transversalement à la direction d'avance (16) et au-dessus de la surface du sol (S) ;
- un bras de suspension (12), formant ladite première unité, lié d'une part à la structure d'attelage (2) et d'autre part au mécanisme de coupe (14) au moyen de ladite articulation (15) dont l'axe (15a) dirigé au moins sensiblement suivant la direction d'avance (16) lorsque ledit mécanisme de coupe (14) est dans la position de travail de sorte à permettre audit mécanisme de coupe (14) de pivoter autour dudit axe (15a).

12. Machine agricole selon la revendication 10 et 11, ***caractérisée en ce que*** le mécanisme de coupe (14) peut être pivoté dans une position de transport, lors de la mise en position de transport le dispositif de commande (51) commande automatiquement le dispositif de verrouillage (47).

## Patentansprüche

1. Landmaschine, die
- eine erste Einheit (12) und eine zweite Einheit (14), wobei die zweite Einheit (14) mittels eines Gelenks (15) mit einer Achse (15a) mit der ersten Einheit (12) verbunden ist, und
- eine Begrenzungsvorrichtung (23; 23A), die mit einer ersten Anordnung (25, 25A), die mit der ersten Einheit (12) verbunden werden soll, und einer zweiten Anordnung (26; 26A), die mit der zweiten Einheit (14) verbunden werden soll, versehen ist, wobei die Begrenzungsvorrichtung (23; 23A) der zweiten Einheit (14) gestattet, innerhalb der von durch mindestens einen Anschlag (31, 32; 31A, 32), der Teil der Begrenzungsvorrichtung (23; 23A) bildet, gestatteten Grenzen um die Achse (15a) zu schwenken,
umfasst, ***dadurch gekennzeichnet,* dass** der oder die Anschläge (31, 32; 31A, 32) elastisch verformbar ist (sind), so dass er (sie) einerseits das Schwenken der zweiten Einheit (14) um die Achse (15a), wenn die zweite Einheit (14) einem ersten Schwenkmoment ausgesetzt ist, begrenzt (begrenzen) und andererseits ein deutlich stärkeres Schwenken der zweiten Einheit (14) um die Achse (15a), wenn die zweite Einheit (14) einem zweiten Schwenkmoment ausgesetzt ist, zulässt (zulassen).

2. Landmaschine nach Anspruch 1, ***dadurch gekennzeichnet,* dass** das zweite Schwenkmoment größer als das erste Schwenkmoment ist.

3. Landmaschine nach Anspruch 1 oder 2, ***dadurch gekennzeichnet,* dass** der (die) Anschlag (Anschläge) (32; 31A, 32) mindestens ein elastisches Element umfasst (umfassen), das (die) mit einer der Anordnungen (25, 26; 25A, 26A) verbunden ist (sind) und mit der anderen Anordnung (25, 26; 25A, 26A) in Kontakt kommen soll (sollen), wenn die zweite Einheit (14) in einem bestimmten Ausmaß um die Achse (15A) schwenkt.

4. Landmaschine nach Anspruch 3, ***dadurch gekennzeichnet,* dass** die zweite Einheit (14) in zwei unterschiedlichen Phasen um die Achse (15a) schwenken kann:
- einer ersten Phase, der das begrenzte Schwenken der zweiten Einheit (14) entspricht und in der die zweite Einheit (14) zwischen den durch den (die) Anschlag (Anschläge) (31, 32; 31A; 32) gestatteten Grenzen frei um die Achse (15a) schwenkt;
- einer zweiten Phase, der das deutlich stärkere Schwenken der zweiten Einheit (14) entspricht und in der die zweite Einheit (14) entgegen den durch das (die) elastische(n) Element(e) erzeugten Kräften zwischen den durch den (die) Anschlag (Anschläge) (31, 32; 31A; 32) gestatteten Grenzen um die Achse (15a) schwenkt.

5. Landmaschine nach Anspruch 3 oder 4, ***dadurch gekennzeichnet,* dass** das (die) elastische(n) Element(e) die zweite Einheit (14) aus der zweiten Phase in die erste Phase zurückholen soll(en).

6. Landmaschine nach irgend einem der Ansprüche 1 bis 5, ***dadurch gekennzeichnet,* dass** die Position und/oder die Steife des (der) Anschlags (Anschläge) (31, 32; 31A, 32) einstellbar ist (sind).

7. Landmaschine nach irgend einem der Ansprüche 1 bis 6, ***dadurch gekennzeichnet,* dass** der (die) Anschlag (Anschläge) (31, 32; 31A, 32) alle oder einen Teil der durch das Schwenken der zweiten Einheit (14) um die Achse (15a) des Gelenks (15) erzeugten Kräfte abführen soll(en).

8. Landmaschine nach irgend einem der Ansprüche 1 bis *7,* ***dadurch gekennzeichnet,* dass** die Begrenzungsvorrichtung (23; 23A) mit einer Verriegelungsvorrichtung (47) kombiniert ist, die das Schwenken der zweiten Einheit (14) um die Achse (15a) des Gelenks (15) zumindest im Wesentlichen verhindern soll.

9. Landmaschine nach Anspruch *8,* ***dadurch gekennzeichnet,* dass** die Verriegelungsvorrichtung (47) einen mit einer der Anordnungen (25, 26; 25A, 26A) verbundenen Riegel (48) umfasst, der auf die andere Anordnung (25, 26; 25A, 26A) dahingehend einwirken soll, das Schwenken der zweiten Einheit (14) um die Achse (15a) des Gelenks (15) zu verhindern.

10. Landmaschine nach Anspruch 8 oder 9, ***dadurch gekennzeichnet,* dass** eine Betätigungsvorrichtung (51) zur Betätigung der Verriegelungsvorrichtung (47) vorgesehen ist.

11. Landmaschine nach irgend einem der Ansprüche 1 bis 10, ***dadurch gekennzeichnet,* dass** es sich bei der Landmaschine um eine Maschine zum Schneiden von Pflanzengut handelt, die
- eine Kupplungskonstruktion (2), die mit einem Motorfahrzeug (7) verbunden werden soll;
- einen Schneidmechanismus (14), der die zweite Einheit bildet und sich:
• in Arbeitsstellung quer zur Vorschubrichtung (16) und am Boden (S) anliegend,
• in Schwadstellung quer zur Vorschubrichtung (16) und über der Oberfläche des Bodens (S)
erstreckt;
- einen die erste Einheit bildenden Aufhängungsarm (12), der einerseits mit der Kupplungskonstruktion (2) und andererseits mittels des Gelenks (15), dessen Achse (15a) zumindest im Wesentlichen in Vorschubrichtung (16) ausgerichtet ist, wenn sich der Schneidmechanismus (14) in der Arbeitsstellung befindet, mit dem Schneidmechanismus (14) verbunden ist, um dessen Schwenken um die Achse (15a) zu gestatten,
umfasst.

12. Landmaschine nach Ansprüchen 10 und 11, ***dadurch gekennzeichnet,* dass** der Schneidmechanismus (14) in eine Transportstellung geschwenkt werden kann und dass die Betätigungsvorrichtung (51) bei der Anordnung in Transportstellung die Verriegelungsvorrichtung (47) automatisch betätigt.

## Claims

1. Agricultural machine comprising:
- a first unit (12) and a second unit (14), the said second unit (14) being connected to the said first unit (12) by means of an articulation (15) of axis (15a), and
- a limiting device (23; 23A) comprising a first assembly (25; 25A) intended to be connected to the said first unit (12) and a second assembly (26; 26A) intended to be connected to the said second unit (14), the said limiting device (23; 23A) allowing the said second unit (14) to pivot about the said axis (15a) within the limits authorized by at least one stop (31, 32; 31A, 32) forming part of the said limiting device (23; 23A),
***characterized in* that** the said stop or stops (31, 32; 31A, 32) is (are) elastically deformable so as to limit, on the one hand, the pivoting of the second unit (14) about the axis (15a) when the said second unit (14) is subjected to a first pivoting torque, and to tolerate, on the other hand, a markedly larger pivoting of the said second unit (14) about the said axis (15a) when the said second unit (14) is subjected to a second pivoting torque.

2. Agricultural machine according to Claim 1, ***characterized in* that** the said second pivoting torque is greater than the first pivoting torque.

3. Agricultural machine according to Claim 1 or 2, ***characterized in* that** the stop(s) (32; 31A, 32) comprises (comprise) at least one elastic element connected to one of the assemblies (25, 26; 25A, 26A) and intended to come into contact with the other assembly (25, 26; 25A, 26A) when the second unit (14) pivots about the axis (15a) by a certain amount.

4. Agricultural machine according to Claim 3, ***characterized in* that** the second unit (14) can pivot about the axis (15a) in two distinct phases:
- a first phase to which the limited pivoting of the said second unit (14) corresponds and in which the said second unit (14) pivots freely about the said axis (15a) between the limits authorized by the stop(s) (31, 32; 31A, 32);
- a second phase to which the markedly greater pivoting of the said second unit (14) corresponds and in which the said second unit (14) pivots about the said axis (15a) between the limits authorized by the stop(s) (31, 32; 31A, 32) against the forces developed by the elastic element(s).

5. Agricultural machine according to Claim 3 or 4, ***characterized in* that** the elastic element(s) is (are) intended to return the second unit (14) from the second phase to the first phase.

6. Agricultural machine according to any one of Claims 1 to 5, ***characterized in* that** the position and/or the stiffness of the stop(s) (31, 32; 31A, 32) is(are) adjustable.

7. Agricultural machine according to any one of Claims 1 to *6,* ***characterized in* that** the stop(s) (31, 32; 31A, 32) are intended to dissipate all or some of the forces generated by the pivoting of the second unit (14) about the axis (15a) of the articulation (15).

8. Agricultural machine according to any one of Claims 1 to 7, ***characterized in* that** the said limiting device (23; 23A) is combined with a locking device (47) intended to at least substantially lock the pivoting of the second unit (14) about the axis (15a) of the articulation (15).

9. Agricultural machine according to Claim 8, ***characterized in* that** the locking device (47) comprises a latch (48) connected to one of the assemblies (25, 26; 25A, 26A) and intended to act on the other assembly (25, 26; 25A, 26A) to lock the pivoting of the second unit (14) about the axis (15a) of the articulation (15).

10. Agricultural machine according to Claim 8 or 9, ***characterized in* that** a control device (51) intended to operate the locking device (47) is provided.

11. Agricultural machine according to any one of Claims 1 to 10, ***characterized in* that** the said agricultural machine is a plant-cutting machine comprising:
- a hitching structure (2) intended to be connected to a motor vehicle (7);
- a cutting mechanism (14) forming the said second unit and extending:
• in the work position, transversely to the direction of forward travel (16) and resting on the ground (S);
• in the windrowing position, transversely to the direction of forward travel (16) and above the surface of the ground (S);
- a suspension arm (12), forming the said first unit, connected on the one hand to the hitching structure (2) and on the other hand to the cutting mechanism (14) by means of the said articulation (15), the axis (15a) of which is directed at least substantially in the direction of forward travel (16) when the said cutting mechanism (14) is in the work position so as to allow the said cutting mechanism (14) to pivot about the said axis (15a).

12. Agricultural machine according to Claim 10 and 11, ***characterized in* that** the cutting mechanism (14) can be pivoted into a transport position and during placement in the transport position the control device (51) automatically operates the locking device (47).
